# EUROPÄISCHE PATENTSCHRIFT

(11) **EP 2 159 890 B1**
(45) Veröffentlichungstag und Bekanntmachung des Hinweises auf die Patenterteilung: **19.10.2011**
(21) Anmeldenummer: 09168463.9
(22) Anmeldetag: 24.08.2009
(51) Int. Cl.: H02G 3/06, H02G 3/04

(54) **Vorrichtung zur Führung von Kabeln**
Device for guiding cables
Dispositif destiné au guidage de câbles

(30) Priorität: 28.08.2008 CH 13782008
(43) Veröffentlichungstag der Anmeldung: 03.03.2010
(73) Patentinhaber: Zurecon AG, 8003 Zürich (CH)
(72) Erfinder: Pfluger, Gerd, CH-4625 Oberbuchsiten (CH)
(74) Vertreter: Rutz & Partner

(56) Entgegenhaltungen:
- FR-A- 1 471 497
- GB-A- 2 314 216
- US-A- 3 053 358

## Beschreibung

Die Erfindung betrifft eine Vorrichtung zur Führung von Kabel, die insbesondere innerhalb eines Gebäudes entlang eines geeigneten Verkehrswegs zu installieren sind.

In Gewerbe- Industrie- und Verwaltungsgebäuden werden Kabel, insbesondere Kabel für Stark- und Schwachstromnetze, infolge fehlender Eigenstabilität in Kabelkanälen geführt, beispielsweise von einem Schaltfeld einer Zentrale zu den Verbrauchern. Kabelführungsvorrichtungen dieser Art sind beispielsweise aus [1], EP 1 594 204 B1 bekannt.

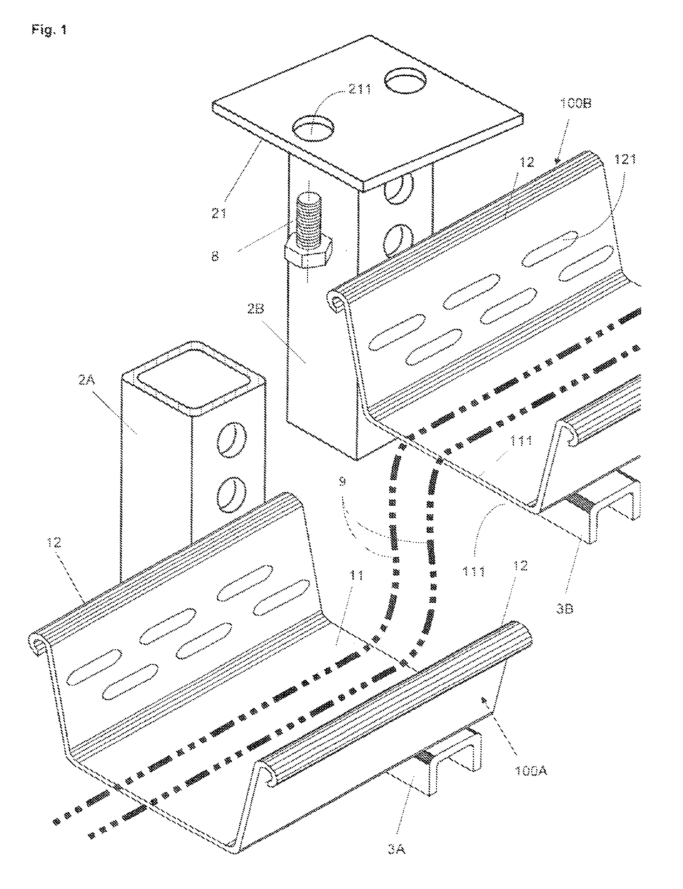

Wie dies in [3] beschrieben und nachstehend in Figur 1 gezeigt ist, besteht das zur Montage an Decken dienende Trägermaterial solcher Kabelführungsvorrichtungen normalerweise aus einer Deckenstütze 2A bzw. 2B, mit der ein Ausleger 3A bzw. 3B verbunden ist. Auf den waagrecht ausgerichteten Ausleger 3A bzw. 3B wird in der Folge eine Kabelbahn 100A bzw. 100B abgelegt, die der Aufnahme des Kabelmaterials 9 dient. Kabelbahnen 100A bzw. 100B dieser Art weisen normalerweise ein U-Profil mit einem Mittelteil 11 auf, an dessen Seiten je ein Seitenteil 12 vorgesehen ist.

Die normalerweise aus verzinktem oder rostfreiem Stahl bestehende Deckenstütze 2A bzw. 2B weist ein plattenförmiges Kopfstück 21 auf, das mit einem meist gelochten, stab- oder rohrförmigen Profilteil verschweisst, verschraubt oder auf eine andere Art fest verbunden ist. Zur Installation der Deckenstütze 2A bzw. 2B werden Montageschrauben 8 durch im Kopfstück 21 vorgesehene Öffnungen 211 geführt und mit der Decke verschraubt. Anschliessend wird der Ausleger 3A bzw. 3B auf passender Höhe mit dem Profilteil der Deckenstütze 2A bzw. 2B verschraubt oder darin eingehängt.

Wie dies in Figur 1 gezeigt ist, sind entlang eines Verkehrswegs oft Höhenunterschiede zu überbrücken. Dabei werden aufeinander folgende Kabelbahnen 100A bzw. 100B auf unterschiedlichen Höhen montiert, wonach die in die Kabelbahnen 100A bzw. 100B oft ungeschützt von einem Ende einer ersten Kabelbahn 100A zum korrespondierenden Ende einer zweiten Kabelbahn 1B verlaufen. Die Kabel 9 können in diesem Fall an einer Kante 111 des Mittelteils 11 der höher gelegenen Kabelbahn 1B anliegen und müssen daher beispielsweise durch eine Schutzhülle geschützt werden. Dies erfordert jedoch einen gewissen Aufwand bei der Installation und insbesondere bei einem späteren Austausch der Kabel 9. Ferner ist bekannt, Höhenunterschiede zu überwinden, indem eine Kabelbahn schräg installiert wird. Möglich ist auch die Verwendung gebogener Elemente. Nachteilig ist in diesem Fall, dass der Verkehrsweg zumeist nicht nach Wunsch gewählt werden kann, weil die zur Verfügung stehenden Elemente nicht die passenden Abmessungen aufweisen. Besonders aufwändig gestalten sich die Installationsarbeiten, wenn ein Verkehrsweg entlang einer gewünschten Kurve in einer Ebene oder gar im Raum realisiert werden soll, wie dies bei Rundbauten oft erforderlich ist.

Aus der GB2314216A ist eine weitere Kabelführungsvorrichtung bekannt bei der zwei Kabelbahnen durch ein gebogenes Kabelbahnsegment fest miteinander verbunden werden. Durch das gebogene Kabelbahnsegment wird eine Richtungsänderung der Kabelführungsvorrichtung um einen festen Winkel von 90° in vertikaler Richtung erzielt. Weitere Richtungsänderungen sind nicht realisierbar.

Aus der US3053358A sind zwei Ausgestaltungen einer Kabelführungsvorrichtung bekannt, die sich wesentlich voneinander unterscheiden. In der ersten Ausgestaltung erlaubt die Kabelführungsvorrichtung Richtungsänderungen in der vertikalen Ebene. In der zweiten Ausgestaltung erlaubt die Kabelführungsvorrichtung Richtungsänderungen in der horizontalen Ebene.

Der vorliegenden Erfindung liegt daher die Aufgabe zugrunde, eine verbesserte Kabelführungsvorrichtung zu schaffen.

Insbesondere ist eine mit geringem Aufwand an Wand und/oder Decke montierbare Kabelführungsvorrichtung zu schaffen, mittels der Kabel entlang eines beliebig wählbaren Verkehrswegs in einem Raum geführt werden können, ohne dass die verlegten Kabel besonders geschützt werden müssten.

Ferner ist eine Kabelführungsvorrichtung zu schaffen, die mit minimalem Aufwand entlang beliebigen Verkehrswegen installierbar ist und flexibel horizontal und vertikal den real existierenden baulichen Gegebenheiten, die durch den Diese Aufgabe wird mit einer Kabelführungsvorrichtung gelöst, welche die in Anspruch 1 angegebenen Merkmale aufweist. Vorteilhafte Ausgestaltungen der Erfindung sind in weiteren Ansprüchen angegeben.

Die Kabelführungsvorrichtung weist wenigstens zwei der Aufnahme von Kabel dienende Kabelbahnen auf, die je aus einem Mittelteil sowie einem ersten und einem zweiten mit Wandöffnungen versehenen Seitenteil bestehen. Die Kabelbahnen sind beispielsweise je von einer Stützvorrichtung gehalten, die an einer Wand oder einer Decke installiert sind. Ferner können die Kabelbahnen auch direkt mit dem Mauerwerk verbunden werden.

Erfindungsgemäss sind die Kabelbahnen mit einem oder mehreren Kabelbahnsegmenten miteinander verbunden, welche im Wesentlichen denselben Querschnitt wie die Kabelbahnen aufweisen und dazu vorzugsweise mit gleichartigen bzw. fertigungstechnisch identischen Mittelteilen und/oder Seitenteilen versehen sind.

Die Länge der Kabelbahnsegmente entspricht hingegen maximal einem Drittel der Länge der Kabelbahnen. Vorzugsweise beträgt die Länge der Mittelteile der Kabelbahnsegmente 15 cm bis 45 cm. Der Installateur wählt die Kabelbahnsegmente entsprechend den gewünschten Radien der Kabel in den horizontalen und/oder vertikalen Kurven des Verkehrsweges.

Die Seitenteile der Kabelbahnsegmente sind an beiden Enden mit je zwei achsparallel ausgerichteten Flanschelementen versehen, deren gegenseitiger Abstand grösser ist als der Abstand der Seitenteile der Kabelbahnen. Jedes der vier Flanschelemente ist mit einer Montageöffnung versehen, durch die sowie durch je eine Wandöffnung eines zugeordneten Seitenteils der Kabelbahn hindurch ein Montagebolzen geführt ist, welcher die entsprechenden Teile der Kabelbahn und des Kabelbahnsegments miteinander verbindet.

Die vorzugsweise in Form von Längsschlitzen vorliegenden Montageöffnungen in den Flanschelementen erstrecken sich vorzugsweise parallel zur Längsachse der Kabelbahnsegmente beispielsweise über 3 cm bis 10 cm.

Anhand der in den Längsschlitzen gehaltenen Montagebolzen entstehen somit gelenkige Verbindungen zwischen den Kabelbahnsegmenten und den Kabelbahnen. Die Kabelbahnsegmente können daher in einem wählbaren Winkel gegenüber den damit verbundenen Kabelbahnen geneigt und/oder gedreht werden. Die Montagebolzen sind in den Montageöffnungen der Flanschelemente somit verschiebbar gelagert, weshalb miteinander verbundene Kabelbahnen und Kabelbahnsegmente auch in einer Ebene gegeneinander drehbar sind. Die erfindungsgemässe Kabelführungsvorrichtung erlaubt es daher, Kabel entlang eines Verkehrswegs zu installieren, der z.B. auf einem einzelnen oder unterschiedlichen Höhenniveaus mit beliebigen Richtungsänderungen verläuft. Sofern ein Verkehrsweg in einem Gebäude in der Höhe und von einer ersten Richtung zu einer zweiten Richtung ändert, so kann der Installateur die Kabelbahnen auf den verschiedenen Höhenniveaus und in den entsprechenden Richtungen z.B. anhand von mit der Wand oder Decke verbindbaren Stützvorrichtungen installieren. Anschliessend können die Kabelbahnen anhand der Kabelbahnsegmente miteinander verbunden werden. Die Kabelbahnsegmente können dabei analog zu Gliedern einer Kette ohne zusätzliche Montagevorrichtungen installiert werden.

Besonders vorteilhaft ist, dass die Kabelführungsvorrichtung keine Unterbrüche aufweist und die darin geführten Kabel daher überall optimal gestützt sind, weshalb entsprechende Schutzmassnahmen für die Kabel hinfällig sind. Da nur die Kabelbahnen fest installiert werden müssen, und die Kabelbahnsegmente mit wenigen Handgriffen montiert werden können, resultiert trotz der Vermeidung von Unterbrüchen ein minimaler Installationsaufwand.

Für den Installateur, der seinen Planungsaufwand möglichst klein halten will, ist besonders vorteilhaft, dass die erfindungsgemässe Kabelführungsvorrichtung mit minimalem Aufwand flexibel an die baulichen Gegebenheiten angepasst werden kann.

Mittels der erfindungsgemässen Lösungen gelingt es daher, eine Kabelführungsvorrichtung für einen beliebigen Verkehrsweg in einem Gebäude in einfacher Weise zu installieren. Es ist nicht notwendig, entsprechend geformte Metallbogen zu verwenden oder Kabel entsprechend zu schützen, damit sie nicht unmittelbar an einer Kante einer Kabelbahn anliegen und beschädigt werden. Die Installation der Kabelbahnsegmente erfolgt mit wenigen Handgriffen. Beispielsweise können zwei oder mehrere Kabelbahnsegmente in einem ersten Schritt miteinander, in einem zweiten Schritt mit einer ersten Kabelbahn und in einem dritten Schritt mit einer zweiten Kabelbahn verbunden werden.

Zur Realisierung einer bestimmten Kurve bei einer horizontal und/oder vertikal verlaufenden Kabelbahn werden vorzugsweise zwei oder mehrere Kabelbahnsegmente miteinander verbunden, indem deren Flanschelemente je mittels eines Montagebolzens miteinander gekoppelt werden.

Vorzugsweise überlappen die Flanschelemente der Kabelbahnsegmente die Seitenteile der Kabelbahnen zumindest teilweise, so dass die Montagebolzen in die dort vorgesehenen Wandöffnungen eingeführt werden können.

Die Länge der Montagebolzen ist vorzugsweise derart gewählt, dass zwei miteinander verbundene Kabelbahnsegmente bzw. eine Kabelbahn sowie ein damit verbundenes Kabelbahnsegment, die in einer Ebene liegen, in einem Winkel angeordnet werden können, der in einem Bereich von bis zu 25° liegt.

Die Mittelteile der Kabelbahnen und der Kabelbahnsegmente sind vorzugsweise durch gleichartige gelochte Bleche oder metallene Querstreben gebildet. Ferner kann die erfindungsgemässe Lösung auch mit Gitterbahnen realisiert werden. Sofern gelochte Bleche verwendet werden, können Kabelkanäle und Kabelbahnsegmente in einem einzigen Biegevorgang gefertigt werden.

In einer weiteren vorzugsweisen Ausgestaltung sind Fixierelemente vorgesehen, die an benachbarten Kabelbahnsegmenten bzw. an einer Kabelbahn sowie einem damit verbundenen Kabelbahnsegment, vorzugsweise an deren Seitenteilen, installiert sind, und diese in einem gewählten Winkel zueinander halten. Dadurch gelingt es, mehrere Kabelbahnsegmente in einer Kurve mit konstantem oder sich änderndem Radius zu installieren. Diese Fixierelemente sind z.B. Metallsstäbe oder aus Blech ausgestanzte flache Winkelstücke, die mit den Seitenwänden der gegeneinander abgewinkelten Kabelbahnsegmente verschraubbar sind, und diese auch dann in einem entsprechenden Winkel von z.B. 22,5°, 30° oder 45° halten, wenn die anschliessenden Kabelbahnen noch nicht installiert und/oder fixiert sind.

Nachfolgend wird die Erfindung, einschliesslich weiterer vorzugsweiser Ausgestaltungen, anhand von Zeichnungen beispielsweise näher erläutert. Dabei zeigt:
- Fig. 1: die eingangs beschriebene Kabelführungsvorrichtung mit zwei auf unterschiedlicher Höhe montierten Kabelbahnen 1A, 1B;
- Fig. 2: ein erstes U-Profil-förmiges Kabelbahnsegment 1C für eine erfindungsgemässe Kabelführungsvorrichtung, welches ein Mittelteil 110 und zwei beidseitig mit Flanschelementen 1200 versehene Seitenteile 120 aufweist, welches der Kopplung mit weiteren Kabelbahnsegmenten 1C oder Kabelbahnen 1A, 1B, 1D dienen;
- Fig. 3: ein zweites Kabelbahnsegment 1C für eine erfindungsgemässe Kabelführungsvorrichtung, welches dieselben Abmessungen wie das Kabelbahnsegment 1c von Figur 2 aufweist, jedoch mit einem anders ausgestalteten Mittelteil 120 versehen ist;
- Fig. 4: eine erfindungsgemässe Kabelführungsvorrichtung mit zwei rechtwinklig zueinander ausgerichteten Kabelbahnen 1A und 1B, die durch zwei Kabelbahnsegmente 1C₁, 1C₂ gemäss Figur 3 miteinander verbunden sind;
- Fig. 4a: eine Detailansicht von Figur 4, in der die Verbindung der Flanschelemente 1200 der zwei Kabelbahnsegmente 1C₁, 1C₂ von Figur 4 gezeigt ist;
- Fig. 5: eine erfindungsgemässe Kabelführungsvorrichtung in zwei Darstellungen mit drei auf unterschiedlichen Höhen gehaltenen Kabelbahnen 1A, 1B, 1D die durch Kabelbahnsegmente 1C₁, 1C₂ gemäss Figur 2 miteinander verbunden sind;
- Fig. 6: eine erfindungsgemässe Kabelführungsvorrichtung in zwei Darstellungen mit drei auf unterschiedlichen Höhen gehaltenen Kabelbahnen 1A, 1B, 1D die durch Kabelbahnsegmente 1C₁, 1C₂ gemäss Figur 3 miteinander verbunden sind;
- Fig. 7: aus Blech ausgestanzte Fixierelemente 6, mittels derer Kabelbahnen 1A, 1B, 1D und Kabelbahnsegmente 1C₁, 1C₂, oder Kabelbahnsegmente 1C₁, 1C₂ untereinander in einem festgelegten Winkel von 30° oder 45° miteinander verbindbar sind, so dass Kurven innerhalb der Kabelführungsvorrichtung realisierbar sind, die einen festgelegten Kurvenradius aufweisen; und
- Fig. 8: in schematischer Darstellung eine erfindungsgemässe Kabelführungsvorrichtung, die in einem Rundbau entlang einem entsprechenden Gemäuer 4 installiert ist.

Figur 1 zeigt die eingangs beschriebene Kabelführungsvorrichtung mit zwei mittels Deckenstützen 2A, 2B und Auslegern 3A, 3B gehaltenen Kabelbahnen 1A, 1B, die auf unterschiedlichen Höhen installiert sind.

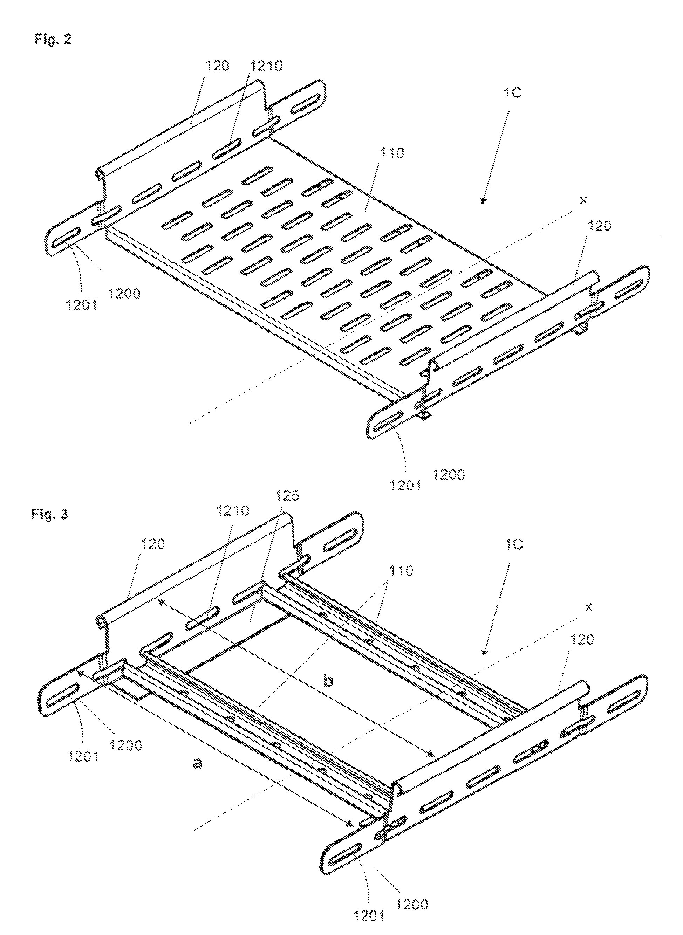

Figur 2 zeigt ein erstes U-Profil-förmiges Kabelbahnsegment 1C für eine erfindungsgemässe Kabelführungsvorrichtung, welches ein Mittelteil 110 und zwei beidseitig mit Flanschelementen 1200 versehene Seitenteile 120 aufweist. Das Mittelteil 110 und die Seitenteile 21, die aus gelochtem Blech gefertigt sind, bilden ein U-Profil. An jedem Seitenteil 120 ist an beiden Enden je ein Flanschelement 1200 vorgesehen, welches einstückig mit dem Material des Seitenteils 120 verbunden und parallel zur Längsachse x des Kabelbahnsegments 1C ausgerichtet ist.
Figur 3 zeigt ein zweites Kabelbahnsegment 1C, dessen Abmessungen identisch sind zum Kabelbahnsegmente von Figur 2. hingegen wird das Mittelteil 110 dieses Kabelbahnsegment 1C von nach oben geöffneten C-Profilstücken gebildet, welche beidseits an einem an jedem Seitenteil 120 vorgesehenen Längsflansch 125 befestigt sind. Die Seitenteile 120 der Kabelbahnsegmente von Figur 2 und Figur 3 sind hingegen identisch ausgestaltet.

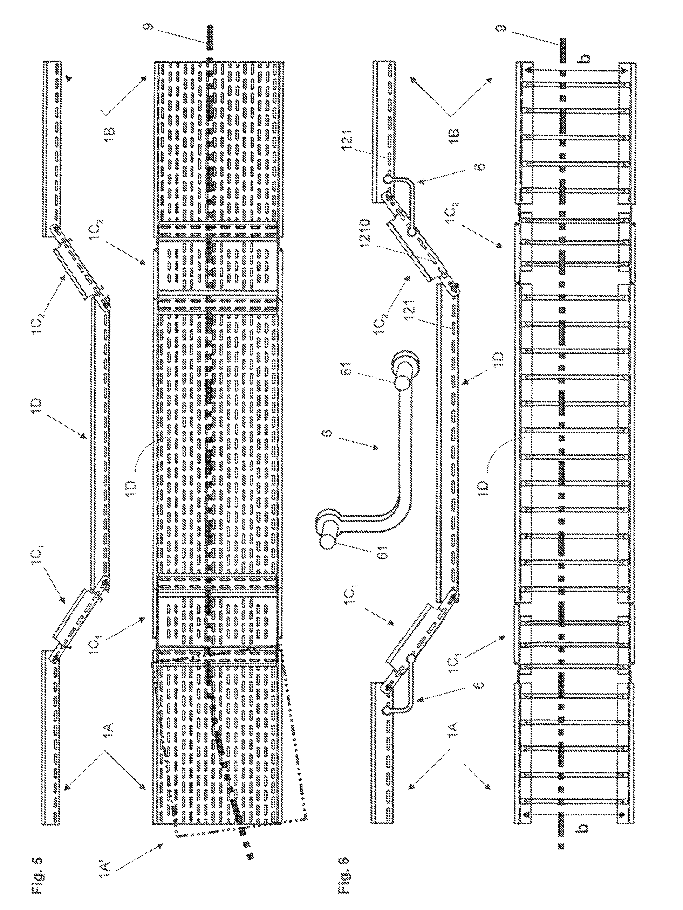

In Figur 3 ist ferner der Abstand b zwischen den Seitenteilen 120 des Kabelbahnsegments 1C eingezeichnet, welcher auch dem Abstand b der Seitenteile 12 der Kabelbahnen 1A, 1B, 1D entspricht (siehe Figur 6). Aus Figur 3 ist ferner ersichtlich, dass der Abstand a zwischen den Flanschelementen 1200 grösser ist, als der Abstand b zwischen den Seitenteilen 12, 120 der Kabelbahnsegmente 1C und der Kabelbahn 1A. Das Kabelbahnsegment 1C kann daher, Mittelteil 12 an Mittelteil 120, mit einer Kabelbahn 1A verbunden werden, wobei die Flanschelemente 1200 die Seitenteile 12 der Kabelbahn 1A aussen überlappen.

In den Figuren 2 und 3 ist ferner gezeigt, dass jedes der einstückig mit dem zugehörigen Seitenteil 120 verbundene Flanschelement 1200 eine Montageöffnung 1201 aufweist, die in dieser vorzugsweisen Ausgestaltung, der Grösse der Wandöffnungen 121, 1210 in den Seitenteilen 120 der Kabelbahnsegmente 1C und der Kabelbahnen 1A, 1B, ... entsprechen.

Das Kabelbahnsegment 1C und die Kabelbahn 1A können daher derart gegeneinander verschoben werden, dass jede der Montageöffnungen 1201 der Flanschelemente 1200 je eine Wandöffnung 121 überdeckt. Ferner können zwei Kabelbahnsegmente 1C₁, 1C₂ ebenfalls derart gegeneinander verschoben werden, dass sich die Montageöffnungen 1201 der Flanschelemente 1200 überdecken.

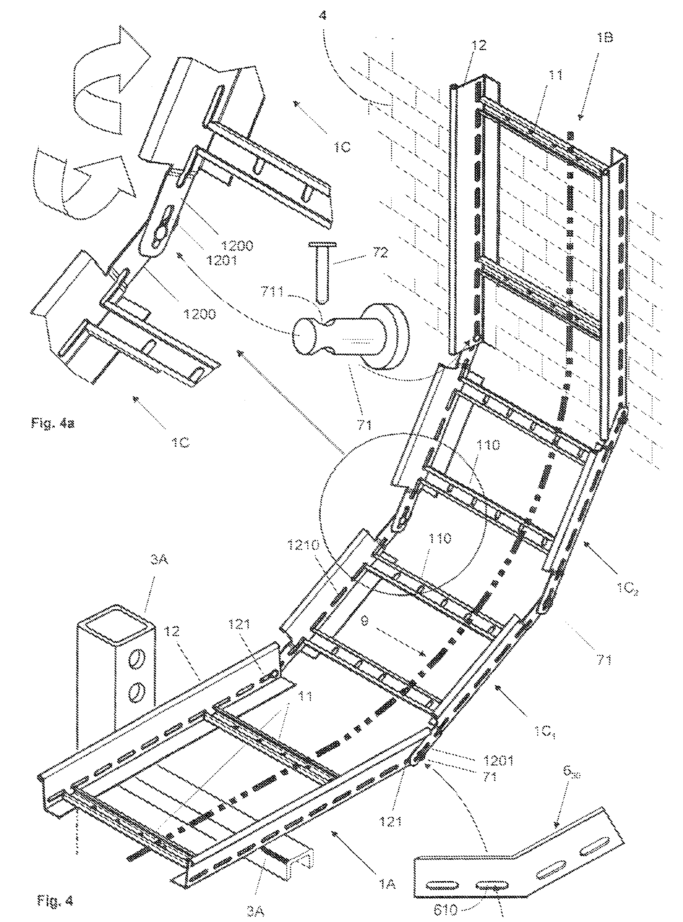

Zur Verbindung von Kabelbahnsegmenten 1C₁, 1C₂ untereinander sowie zur Verbindung von Kabelbahnsegmenten 1C₁, 1C₂ mit einer Kabelbahnen 1A wird durch die Montageöffnungen 1201 von zwei aneinander liegenden Flanschelementen 1200 bzw. durch eine Montageöffnung 1201 eines Flanschelements 1200 und durch eine passende Wandöffnung 121 in einem Seitenteil 12 der Kabelbahn 1A ein Montagebolzen 71 geführt, wie dies in den Figuren 4 und 4a gezeigt ist.

In Figur 4 ist eine erfindungsgemässe Kabelführungsvorrichtung mit einer ersten und einer zweiten Kabelbahn 1A, 1B gezeigt, die senkrecht zueinander stehen und durch zwei um 45° gegeneinander geneigte Kabelbahnsegmente 1C₁, 1C₂ in der oben beschriebenen Weise miteinander verbunden sind. Das in die Kabelführungsvorrichtung eingelegte Kabel 9 wird daher exakt entlang dem gewünschten Verkehrsweg geführt.

Die waagrecht ausgerichtete erste Kabelbahn 1A ist auf einem von einer Stützvorrichtung 2A gehaltenen Ausleger 3a installiert. Die senkrecht ausgerichtete zweite Kabelbahn 1B ist beispielsweise mittels Schrauben und Dübel an einer Wand installiert. Die Kabelbahnsegmente 1C₁, 1C₂, mittels derer der gewünschte Kurvenradius realisiert wird, sind daher von den beiden Kabelbahnen 1A, 1B stabil gehalten, obwohl sie nur gelenkig mit diesen verbunden sind. Der Installateur kann die Kabelbahnsegmente 1C₁, 1C₂, daher mit wenigen Handgriffen montieren, nachdem die Kabelbahnen 1A, 1B installiert wurden. Für den Fall, dass die Kabelbahnen 1A, 1B nicht exakt an der gewählten Stelle fixiert wurden, resultiert eine automatische Anpassung durch eine entsprechende Neigung der Kabelbahnsegmente 1C₁, 1C₂ und eine Verschiebung der Montagebolzen 71 innerhalb der Montageöffnungen 1201.

Wie dies in den Figuren 4 und 4a gezeigt ist, sind sowohl die die Flanschelemente 1200 der beiden Kabelbahnsegmente 1C₁, 1C₂ untereinander als auch die den Kabelbahnen 1A, 1B zugewandten und diese überlappenden Flanschelemente 1200 mit denselben Montagebolzen 71 mit den Seitenteilen 12 der Kabelbahnen 1A, 1B verbunden.

Die Montagebolzen 71 weisen in dieser Ausgestaltung einen Bolzenkopf und einen Bolzenschaft mit einer Öffnung 711 auf, in die ein Verschlusselement 72 einführbar ist. Selbstverständlich können Montagebolzen und Verschlusselemente beliebiger Art verwendet werden. Besonders vorteilhaft können Schrauben und Schraubenmuttern verwendet werden, wobei der Schaft der Schraube vorzugsweise nur teilweise mit einem Gewinde versehen ist.

Das Kabelbahnsegment 1C kann daher, Mittelteil 120 an Mittelteil 12, mit einer Kabelbahn 1A verbunden werden, wobei die Flanschelemente 1200 die Seitenteile 12 der Kabelbahnen 1A aussen vorzugsweise in einem derartigen Abstand überlappen, dass die Kabelbahn 1A und das Kabelsegment 1C in der Ebene gegeneinander gedreht werden können, wie dies in Figur 5 gezeigt ist. Die Länge der Montagebolzen 71 ist entsprechend gewählt. In Figur 4a ist symbolisiert, dass die gelenkige Verbindung zwischen den Kabelbahnsegmenten 1C₁, C₂ bzw. zwischen den Kabelbahnsegmenten 1C₁, C₂ und den Kabelbahnen 1A, 1B, 1D eine Verschiebung und Drehung in verschiedene Richtungen erlaubt.

Figur 5 zeigt in zwei Darstellungen eine erfindungsgemässe Kabelführungsvorrichtung mit drei auf unterschiedlichen Höhen gehaltenen Kabelbahnen 1A, 1B, 1D die durch Kabelbahnsegmente 1C1, 1C2 gemäss Figur 2 miteinander verbunden sind. Oben ist die Kabelführungsvorrichtung von der Seite gezeigt, wobei ersichtlich ist, dass die äusseren Kabelbahnen 1A, 1B auf einer anderen Höhe liegen als die mittlere Kabelbahn 1D.

In Figur 5, unten, ist die Kabelführungsvorrichtung mit einem darin eingelegten Kabel 9 von oben gezeigt. Dabei ist ersichtlich, dass die Kabelbahn 1A bzw. 1A zur Seite gedreht werden kann, um das Kabel 9 in eine andere Richtung zu führen.

Figur 6 zeigt in zwei Darstellungen eine erfindungsgemässe Kabelführungsvorrichtung mit drei auf unterschiedlichen Höhen gehaltenen Kabelbahnen 1A, 1B, 1D die durch Kabelbahnsegmente 1C1, 1C2 gemäss Figur 3 miteinander verbunden sind. Wie dies in Figur 6, oben, ersichtlich ist, sind bei dieser Ausgestaltung Fixierelemente 6 vorgesehen, die an einer Kabelbahn 1A, 1B, 1D sowie einem damit verbundenen Kabelbahnsegment 1C installiert sind, und diese in einem gewählten Winkel zueinander halten. Die Fixierelemente 6 können einfach geformte Bügel sein, die beiderseitig mit Bolzen 61 versehen sind, die in Wandöffnungen 121 in den Kabelbahnsegmenten 1C und den Kabelbahnen 1A, 1B eingesetzt werden.

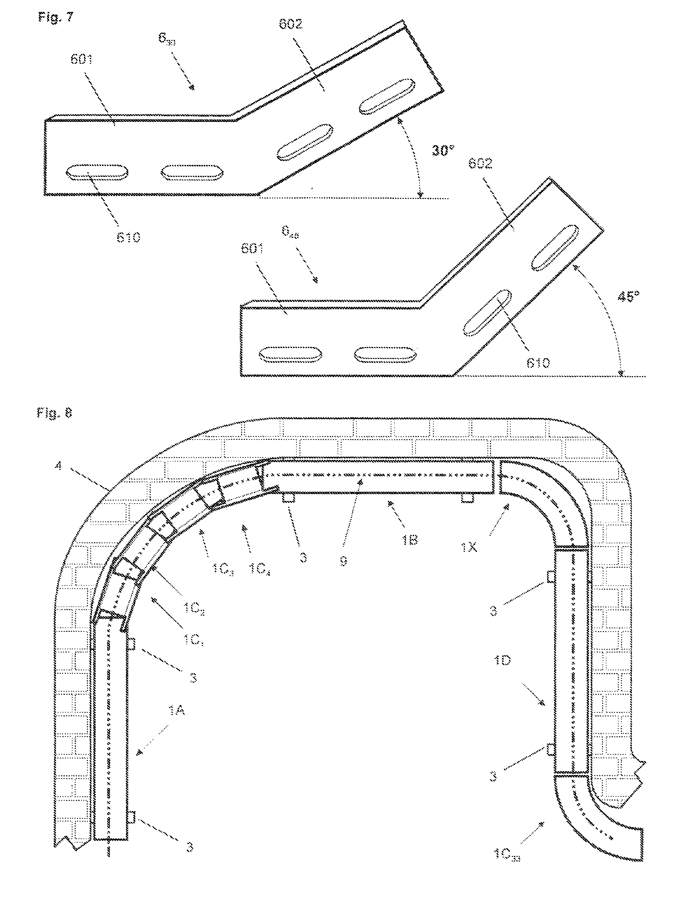

Figur 7 zeigt zwei als Winkelstücke ausgebildete Fixierelemente 6₃₀ bzw. 6₄₅, die zwei um 30° bzw. 45° gegeneinander abgewinkelte Arme 601, 602 aufweisen. Die Fixierelemente 6₃₀ bzw. 6₄₅ sind aus Blech ausgestanzt und somit mit minimalem Aufwand gefertigt und dienen als Alternative zu den stabförmigen Fixierelementen 6 von Figur 6. In Abhängigkeit der zu realisierenden Kurve wählt der Installateur die passenden Fixierelemente 6₃₀ bzw. 6₄₅, die einseitig, vorzugsweise jedoch beidseitig an den entsprechenden Teilen der Kabelführungsvorrichtung montiert werden und dazu mit Öffnungen 610 versehen sind, durch die Schrauben und Bolzen hindurch führbar sind. Das um 30° abgewinkelte Fixierelement 6₃₀ ist ferner in Figur 4 gezeigt. Dort sind zwei Kabelbahnsegmente 1C1, 1C2 vorgesehen, die einseitig mittels drei oder beidseitig mittels sechs Fixierelementen 6₃₀ miteinander bzw. mit den anschliessenden Kabelbahnen 1A und 1B verbunden sind. Wie dies schematisch gezeigt ist, wird z.B. ein Montagebolzen 71 durch eine Öffnung 610 im Hilfselement 6₃₀ sowie durch eine zugehörige Öffnung 1201 oder 1210 im Kabelbahnsegment 1C₁ und eine Öffnung 121 in der zugehörigen Seitenwand 12 der Kabelbahn 1A geführt. Mittels weiterer Schrauben kann das Kabelbahnsegment 1C₁ mit der gewünschten Neigung fixiert werden. Vorzugsweise wird der Montagebolzen 71 ebenfalls durch eine der Öffnungen 610 im Fixierelement 6₃₀ geführt, so dass mit zwei weiteren Befestigungselementen, wie Schrauben oder Bolzen eine stabile 3-Punkt-Verbindung resultiert.

Figur 8 zeigt in schematischer Darstellung eine erfindungsgemässe Kabelführungsvorrichtung, die in einem Rundbau, beispielsweise einem Turm installiert ist. In der ersten Kurve sind vier Kabelbahnsegmente 1C₁, 1C₂ 1C₃, und 1C₄ von Figur 2 montiert, mittels derer eine Biegung von 90° und gleichzeitig eine Höhenänderung. Zum Vergleich sind in den weiteren Kurven konventionelle, bogenförmige Formstücke 1X montiert, die stets mit derselben Neigung, wie die Kabelbahnen installiert werden. Diese 90° -Formstücke 1X werden vorzugsweise ebenfalls durch erfindungsgemässe Kabelbahnsegmente 1C ersetzt, die vorzugsweise raumsparend stapelbar sind und dazu z.B. nach aussen geneigte Seitenwände 120 aufweisen. Die 90°-Formstücke 1X lassen sich hingegen nicht stapeln und passen gegebenenfalls nur dann in einen vorgesehenen Verkehrsweg, falls eine Kurve mit sehr kleinem Kurvenradius vorliegt. In diesem Falle müssen die Enden jedes 90°-Formstücks 1X parallel an den zugehörigen Enden der Kabelbahnen 1B, 1D anliegen. Die erfindungsgemässen Kabelbahnsegmente 1C₁ und 1C₄ liegen jedoch bedarfsweise geneigt an den zugehörigen Enden der Kabelbahnen 1A, 1B an.

Wie dies weiter in Figur 8 gezeigt ist, sind lediglich die Kabelbahnen 1A, 1B und 1D durch Ausleger 3 gehalten. Die Kabelbahnsegmente 1C₁, 1C₂ 1C₃, und 1C₄ werden hingegen mit wenigen Handgriffen, und somit minimalem Aufwand, mittels der oben beschriebenen Bolzenverbindungen montiert.

## Patentansprüche

1. Kabelführungsvorrichtung mit wenigstens zwei der Aufnahme von Kabeln (9) dienenden Kabelbahnen (1A, 13, 1D), die je aus einem Mittelteil (11) sowie einem ersten und einem zweiten mit Wandöffnungen (121) versehenen Seitenteil (12) bestehen und die je von einer Stützvorrichtung (2A, 3A; 2B, 3B) gehalten oder direkt mit Wand oder Decke verbunden sind, wobei wenigstens ein Kabelbahnsegment (1C) vorgesehen ist, welches im Wesentlichen denselben Querschnitt wie die Kabelbahnen (1A, 1B, 1D) aufweist und dessen Seitenteile (120) an beiden Enden mit Flanschelementen (1200) versehen sind, von denen jedes mit einer Montageöffnung (1201) versehen ist, durch die sowie je durch eine Wandöffnung (121) der zugeordneten Kabelbahn (1A; 1B; 1D; eine Montagebolzen (71) hindurch geführt ist, welcher die entsprechenden Teile der Kabelbahn (1A; 1B; 1D) und des Kabelbahnsegments (1C) miteinander verbindet, wobei der gegenseitige Abstand (a) der Flanschelemente (1200) grösser ist als der Abstand (b) der Seitenteile (120) der Kabelbahnen (1A, 1B, 1D) und die Flanschelemente (1200) die Seitenteile (12) der damit verbundenen Kabelbahnen (1A, 1B, 1D) teilweise überlappen; **dadurch gekennzeichnet, dass** die Flanschelemente (1200) achsparallel ausgerichtet sowie flächig ausgestaltet und der gegenseitige Abstand (a) der Flanschelemente (1200) sowie die Länge der Montagebolzen (71) derart gewählt sind, dass das Kabelbahnsegment (1C) an jedem Ende gegenüber einem damit verbundenen weiteren Kabelbahnsegment (1C) oder gegenüber einer damit verbundenen Kabelbahn (1A, 1B, 1D) vertikal und seitlich drehbar ist.

2. Kabelführungsvorrichtung nach Anspruch 1, **dadurch gekennzeichnet, dass** die Montageöffnungen (1201) in den Flanschelementen (1200) sich parallel zur Längsachse (x) der Kabelbahnsegmente (1C) vorzugsweise über 3 cm bis 10 cm erstrecken und/oder dass die Montageöffnungen (1201) in den Flanschelementen (1200) identisch zu den Wandöffnungen (121) der Seitenteile (12) der Kabelbahnen (1A, 1B, 1D) sind.

3. Kabelführungsvorrichtung nach Anspruch 1 oder 2, **dadurch gekennzeichnet, dass** die Mittelteile (11) der Kabelbahnen . (1A, 1B, 1D) und der Kabelbahnsegmente (1C) durch gleichartige gelochte Bleche oder metallene Querstreben gebildet sind.

4. Kabelführungsvorrichtung nach einem der Ansprüche 1 - 3, **dadurch gekennzeichnet, dass** wenigstens ein Fixierelement (6, 6₃₀, 6₄₅) vorgesehen ist, das an benachbarten Kabelbahnsegmenten (1C₁, 1C₂) oder an einer Kabelbahn (1A, 1B, 1D) sowie einem damit verbundenen Kabelbahnsegment (1C) installiert sind, und diese in einem definierten Winkel zueinander halten.

5. Kabelführungsvorrichtung nach Anspruch 4, **dadurch gekennzeichnet, dass** die vorzugsweise beidseitig an der Kabelführungsvorrichtung installierten Fixierelemente (6) stab- oder bügelförmig ausgestaltet und mit Bolzen (61) versehen sind, welche in passend gewählte Öffnungen (121; 1210) in den Seitenwänden (12, 120) der Kabelbahnsegmente (1C₁, 1C₂) und/oder einer Kabelbahn (1A, 1B, 1D) eingesetzt sind.

6. Kabelführungsvorrichtung nach Anspruch 4, **dadurch gekennzeichnet, dass** die vorzugsweise beidseitig an der Kabelführungsvorrichtung installierten Fixierelemente (6₃₀, 6₄₅) aus Blech geformt, insbesondere aus flachem Blech ausgestanzt sind und zwei Arme (601, 602) aufweisen, die gegeneinander um vorzugsweise 22, 5°, 30° oder 45° abgewinkelt sind.

7. Kabelführungsvorrichtung nach einem der Ansprüche 1 - 6, **dadurch gekennzeichnet, dass** die Kabelbahnsegmente (1C) ein Mittelteil (110) und Seitenteile (120) aufweisen, die identisch zu entsprechenden Abschnitten der Mittelteile (11) und Seitenteile (12) der Kabelbahnen (1A, 1B, 1D) sind.

8. Kabelführungsvorrichtung nach einem der Ansprüche 1 - 7, **dadurch** gekenntzeichnet, dass die Länge der Mittelteile (120) der Kabelbahnsegmente (1C) 15cm bis 45 cm beträgt oder entsprechend dem gewünschten Radius der Kabel (9) in den Kurven des Verkehrsweges gewählt ist.

9. Kabelführungsvorrichtung nach einem der Ansprüche 1 - 8, **dadurch gekennzeichnet, dass** die Flanschelemente (1200) einstückig mit den Seitenteilen (120) der Kabelbahnsegmente (1C) verbunden sind.

## Claims

1. Cable guiding device with at least two cable trays (1A, 1B, 1D) that are serving for accommodating cables (9) and that consist each of a central part (11) as well as of a first and a second side part (12) that are provided with wall openings (121) and that are held each by a support device (2A, 3A; 2B, 3B) or are directly connected to a wall or a ceiling, wherein at least one cable tray segment (1C) is provided, which exhibits essentially the same cross section as the cable trays (1A, 1B, 1D) and whose side parts (120) are provided at both ends with flange elements (1200), each of which comprising a mounting opening (1201), through which as well as through one wall opening (121) each of the related cable tray (1A; 1B; 1D) a mounting bolt (71) is guided, which connects the related parts of the cable tray (1A; 1B; 1D) and the cable tray segment (1C) with one another, wherein the mutual distance (a) of the flange elements (1200) is larger than the distance (b) of the side parts (120) of the cable trays (1A, 1B, 1D) and wherein the flange elements (1200) overlap at least partially the side parts (12) of the thereto connected cable trays (1A, 1B, 1D); **characterised in that** the flange elements (1200) are aligned parallel to the axis and are designed planar and that the mutual distance (a) of the flange elements (1200) as well as the length of the mounting bolts (71) is selected in such a way that the cable tray segment (1C) at each end can vertically or laterally be turned with respect to a further cable tray segment (1C) connected thereto or with respect to a cable tray (1A, 1B, 1D) connected thereto.

2. Cable guiding device according to claim 1, **characterised in that** the mounting openings (1201) in the flange elements (1200) extend, preferably over 3cm to 10cm, in parallel to the longitudinal axis (x) of the cable tray segments (1C) and/or that the mounting openings (1201) in the flange elements (1200) are identical to the wall openings (121) of the side parts (12) of the cable trays (1A, 1B, 1D).

3. Cable guiding device according to claim 1 or 2, **characterised in that** the central parts (11) of the cable trays (1A, 1B, 1D) and the cable tray segments (1C) are made of similar perforated sheet metal or metal transverse bars.

4. Cable guiding device according to one of the claims 1 - 3, **characterised in that** at least one fixing element (6, 6₃₀, 6₄₅) is provided, which is installed on neighbouring cable tray segments (1C₁, 1C₂) or on a cable tray (1A, 1B, 1D) as well as on a thereto connected cable tray segment (1C), and which holds those in a defined angle against one another.

5. Cable guiding device according to claim 4, **characterised in that** the fixing elements (6), which preferably are installed at both sides of the cable guiding device, are designed in the form of bars or brackets and are provided with bolts (61), which are insertable in suitably selected openings (121; 1210) in the side walls (12, 120) of the cable tray segments (1C₁, 1C₂) and/or cable trays (1A, 1B, 1D).

6. Cable guiding device according to claim 4, **characterised in that** the fixing elements (6₃₀, 6₄₅), which preferably are installed at both sides of the cable guiding device, are formed from sheet metal, particularly punched from flat sheet metal, and comprise two arms (601, 602), which are bent against one another preferably by 22.5°, 30° or 45°.

7. Cable guiding device according to one of the claims 1 - 6, **characterised in that** the cable tray segments (1C) comprise a central part (110) and side parts (120), which are identical to the corresponding sections of the central parts (11) and side parts (12) of the cable trays (1A, 1B, 1D).

8. Cable guiding device according to one of the claims 1 - 7, **characterised in that** the length of the central parts (120) of the cable tray segments (1C) is 15cm to 45 cm or is selected corresponding to the desired radius of the cables (9) in the curves of the traffic route.

9. Cable guiding device according to one of the claims 1 - 8, **characterised in that** the flange elements (1200) are connected in one piece to the side parts (120) of the cable tray segments (1C).

## Revendications

1. Dispositif de guidage de câbles avec au moins deux chemins (1A, 1B, 1D) de câble qui servent au logement de câbles (9), chemins qui se composent d'une partie médiane (11) et ainsi que d'une première et d'une seconde partie latérale (12) munies d'ouvertures latérales (121) et qui sont maintenus chacun par un dispositif de support (2A, 3A; 2B, 3B) ou reliés directement à la paroi ou au plafond, au moins un segment de chemin de câbles (1C) étant prévu qui présente sensiblement la même section transversale que les chemins de câbles (1A, 1B, 1D) et dont les parties latérales (120) sont munies aux deux extrémités d'éléments de bride (1200) dont chacun est muni d'une ouverture de montage (1201) à travers laquelle respectivement à travers une ouverture murale (121) du chemin de câbles associé (1A, 1B, 1D), il est guidé un boulon de montage (71), qui relie entre eux les parties correspondantes du chemin de câbles (1A; 1B; 1D) et du segment de chemin de câbles (1C), la distance réciproque (a) des éléments de bride (1200) étant plus grande que la distance (b) des parties latérales (120) des chemins de câbles (1A, 1B, 1D) et les éléments de bride (1200) recouvrant partiellement les parties latérales (12) des chemins de câbles (1A, 1B, 1D) reliés à ces derniers, **caractérisé en ce que** les éléments de bride (1200) sont orientés parallèlement à l'axe et sont de forme plate et la distance réciproque (a) des éléments de bride (1200) ainsi que la longueur des boulons de montage (71) sont sélectionnées de sorte que le segment de chemin de câble (1C) est rotatif verticalement et latéralement à chaque extrémité par rapport à un segment de chemin de câbles (1C) relié a ce dernier ou par rapport à un chemin de câbles (1A, 1B, 1D) relié à ce dernier.

2. Dispositif de guidage de câbles selon la revendication 1, **caractérisé en ce que** les ouvertures de montage (1201) dans les éléments de bride (1200) s'étendent parallèlement à l'axe longitudinal (x) des segments de chemin de câbles (1C) de préférence sur 3cm à 10 cm et/ou en ce que les ouvertures de montage (1201) dans les éléments de bride (1200) sont identiques aux ouvertures murales (121) des parties latérales (12) des chemins de câbles (1A, 1B, 1D).

3. Dispositif de guidage de câble selon la revendication 1 2, **caractérisé en ce que** les parties médianes (11) des chemins de câbles (1A, 1B, 1D) et les segments de chemin de câbles (1C) sont formés par des tôles percées similaires ou des âmes métalliques transversales.

4. Dispositif de guidage de câble selon l'une des revendications 1 à 3, **caractérisé en ce qu'**il est prévu au moins un élément de fixation (6, 6₃₀, 6₄₅) qui est installé sur des segments de chemin de câbles (1C₁, 1C₂) ou sur un chemin de câbles (1A, 1B, 1D) ainsi qu'un segment de chemin de câbles (1C) relié à ce dernier et qui les maintient dans un angle défini.

5. Dispositif de guidage de câble selon la revendication 4, **caractérisé en ce que** les éléments de fixation (6) installés de préférence de part et d'autre sur le dispositif de chemin de câbles, ont une forme de barre ou d'étrier et sont munis de boulons (61) qui sont insérés dans des ouvertures sélectionnées appropriées (121; 1210) dans les parois latérales (12, 120) des segments de chemin de câbles (1C₁, 1C₂) et/ou d'un chemin de câbles (1A, 1B, 1D).

6. Dispositif de guidage de câble selon la revendication 4, **caractérisé en ce que** les éléments de fixation (6₃₀, 6₄₅) installés de préférence de part et d'autre sur le dispositif de chemin de câbles sont formés de tôle, en particulier découpés à partir de tôles plates et présentent deux bras (601, 602) qui sont coudés l'un par rapport à l'autre de préférence de 22°.5°, 30° ou 45°.

7. Dispositif de guidage de câble selon l'une des revendications 1 à 6, **caractérisé en ce que** les segments de chemin de clâbles (1C) présentent une partie médiane (110) et des parties latérales (120) qui sont identiques aux sections correspondantes des parties médianes (11) et des parties latérales (12) des chemins de câbles (1A, 1B, 1D).

8. Dispositif de guidage de câbles selon l'une des revendications 1 à 7, **caractérisé en ce que** la longueur des parties médianes (120) des segments de chemin de câbles (1C) est comprise entre 15 cm et 45 cm ou est sélectionnée en fonction du rayon souhaité des câbles (9) dans les courbes du trajet de transport.

9. Dispositif de guidage de câbles selon l'une des revendications 1 à 8, **caractérisé en ce que** les éléments de bride (1200) sont réalisés d'une seule pièce avec les parties latérales (120) des segments de chemin de câbles (1C).
